# FASCICULE DE BREVET EUROPEEN

(11) **EP 1 787 869 B1**
(45) Date de publication et mention de la délivrance du brevet: **29.05.2013**
(21) Numéro de dépôt: 06301150.6
(22) Date de dépôt: 16.11.2006
(51) Int. Cl.: B60R 13/07, B60R 13/08, B62D 25/08

(54) **Véhicule comportant un dispositif de guidage et d'évacuation de l'eau**
Fahrzeug mit einer Wasserabflussvorrichtung
Vehicle comprising a water drain device

(30) Priorité: 18.11.2005 FR 0553503
(43) Date de publication de la demande: 23.05.2007
(73) Titulaire: Peugeot Citroën Automobiles SA, 78943 Vélizy-Villacoublay Cedex (FR)
(72) Inventeur: Leon, Franck, 92500, RUEIL MALMAISON (FR)

(56) Documents cités:
- EP-A- 0 947 415
- DE-A1- 10 315 381
- US-A- 5 145 457
- PATENT ABSTRACTS OF JAPAN vol. 012, no. 004 (M-657), 8 janvier 1988 (1988-01-08) -& JP 62 168710 A (MAZDA MOTOR CORP), 25 juillet 1987 (1987-07-25)
- PATENT ABSTRACTS OF JAPAN vol. 012, no. 131 (M-688), 22 avril 1988 (1988-04-22) -& JP 62 255208 A (TOYODA GOSEI CO LTD), 7 novembre 1987 (1987-11-07)
- PATENT ABSTRACTS OF JAPAN vol. 009, no. 282 (M-428), 9 novembre 1985 (1985-11-09) -& JP 60 124517 A (NISSAN JIDOSHA KK), 3 juillet 1985 (1985-07-03)
- PATENT ABSTRACTS OF JAPAN vol. 002, no. 132 (M-038), 4 novembre 1978 (1978-11-04) -& JP 53 100526 A (TOYOTA MOTOR CORP), 2 septembre 1978 (1978-09-02)

## Description

L'invention se rapporte à un véhicule comprenant dispositif de guidage et d'évacuation de l'eau.

L'invention concerne plus particulièrement un véhicule selon le préambule de la revendication 1.

Les véhicules automobiles comportent, de manière classique, au dessous du pare-brise, une grille d'auvent dont le rôle est de capter l'air qui alimente le système de climatisation du véhicule.

Cette grille d'auvent est généralement supportée par une traverse inférieure de baie et est placée entre la partie inférieure du pare-brise et le capot moteur du véhicule. Chaque extrémité de la grille d'auvent est en appui sur un élément de carrosserie, tel qu'une doublure d'aile.

On constate, généralement, que l'étanchéité entre la grille d'auvent et la doublure d'aile est imparfaite ; ainsi, de nombreuses infiltrations d'eau sont constatées dans le compartiment moteur. Ces infiltrations, particulièrement gênantes, peuvent provoquer des détériorations notamment au niveau du réseau électrique ou provoquer la corrosion des fixations de pièces de structure.

Le brevet JP 62 168 710 se rapporte à un dispositif de guidage et d'évacuation d'eau s'étendant dans un compartiment moteur d'un véhicule entre l'extrémité latérale d'une grille d'auvent et un élément de carrosserie du véhicule, ledit dispositif comprenant un moyen conformé pour évacuer l'eau au travers de l'élément de carrosserie.

Un but de la présente invention est de pallier tout ou partie des inconvénients de l'art antérieur relevés ci-dessus.

A cette fin, le véhicule selon l'invention, comporte les caractéristiques de la revendication 1.

Par ailleurs, l'invention peut comporter l'une ou plusieurs des caractéristiques des revendications dépendantes 2, 3 ou 4.

Par ailleurs, l'invention peut comporter l'une ou plusieurs des caractéristiques suivantes :
- une mousse d'isolation acoustique peut être disposée entre le dispositif selon l'invention et l'élément de carrosserie du véhicule,
- le véhicule peut comprendre des moyens d'insonorisation placés sensiblement parallèlement à la traverse inférieure de baie, et le dispositif selon l'invention peut être disposé entre la grille d'auvent et les moyens d'insonorisation,
- le dispositif selon l'invention peut être fixé sur l'une des extrémités d'une pièce de liaison, des éléments de suspension du véhicule peuvent être situés au voisinage de l'autre extrémité de la pièce de liaison.

D'autres particularités et avantages apparaîtront à la lecture de la description ci-après faite en référence aux figures dans lesquelles :
- la figure 1 est une vue partielle schématique et en perspective de la partie avant d'un véhicule automobile comportant un dispositif conforme à l'invention,
- la figure 2 est une vue schématique en perspective du dispositif conforme à l'invention et met en évidence son positionnement par rapport à une grille d'auvent du véhicule,

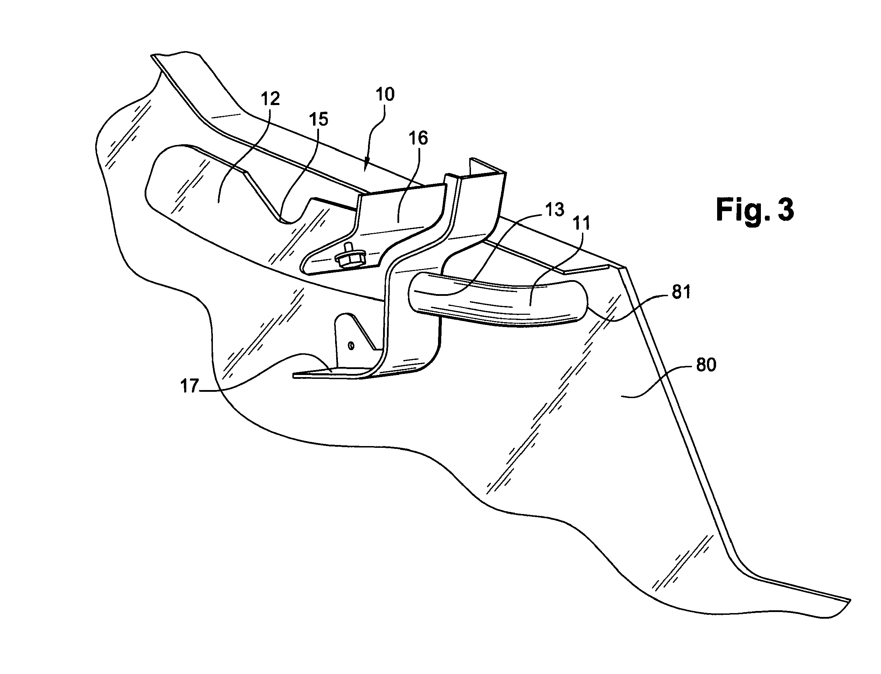

- la figure 3 est une vue schématique en perspective du dispositif conforme à l'invention et met en évidence son positionnement par rapport à un élément de carrosserie du véhicule.

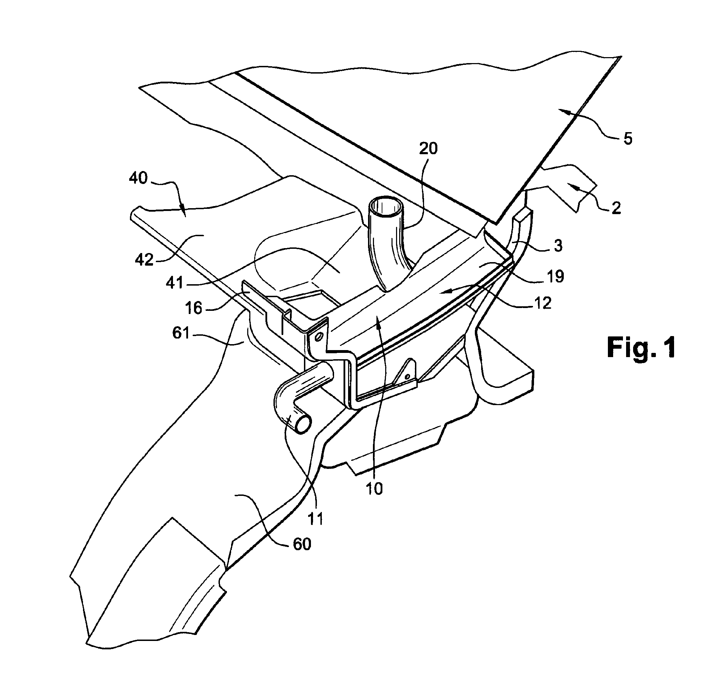

Sur la figure 1 , on a représenté schématiquement la partie inférieure d'un pare-brise 5 qui est fixée au moyen d'un cordon de colle sur une traverse inférieure de baie 2. Cette traverse inférieure de baie 2 s'étend sur toute la largeur du véhicule automobile et est fixée rigidement à des éléments de structure. Chaque bord transversal du pare-brise 5 est fixé sur un montant de baie (non représenté).

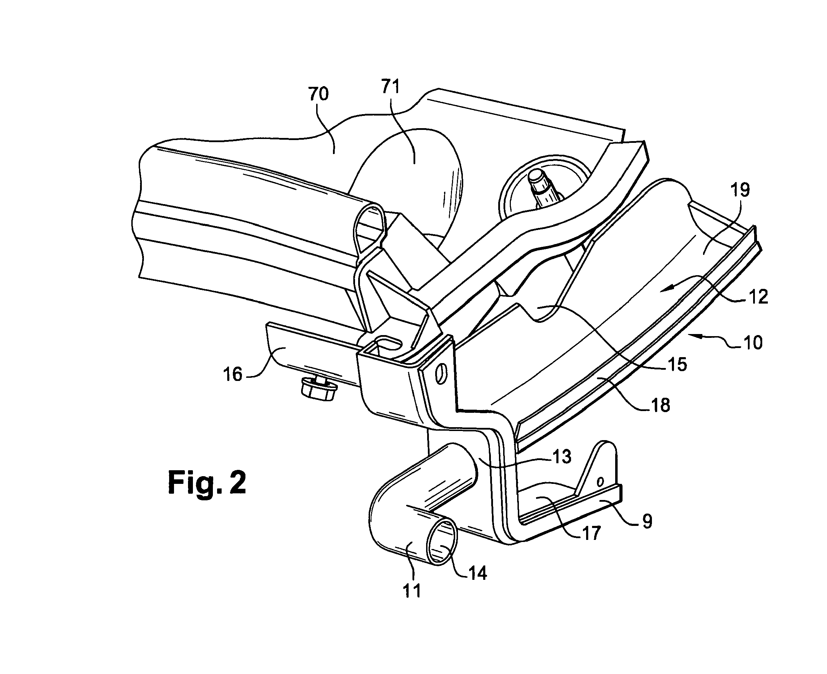

La traverse inférieure de baie 2 supporte également une grille d'auvent 70 (représentée seulement à la figure 2 pour des raisons de clarté) qui prolonge la partie inférieure du pare-brise 5 et qui a pour rôle de capter l'air pour alimenter le système de climatisation du véhicule automobile. Une doublure de traverse inférieure de baie 3 supporte la traverse inférieure de baie 2.

Une pièce d'insonorisation 40 destinée à atténuer les vibrations et les bruits dans l'habitacle du véhicule, s'étend également sur toute la largeur du véhicule de façon sensiblement parallèle à la traverse inférieure de baie 2 et à la grille d'auvent 70. La pièce d'insonorisation 40 est placée sous la grille d'auvent 70, chacune de ses extrémités est en appui sur une doublure d'aile 80 du véhicule

Selon l'invention, le véhicule comprend un dispositif 10 destiné à recueillir, à guider et à évacuer l'eau en provenance de la grille d'auvent 70 et du pare-brise 5. Le dispositif 10, objet de l'invention, est placé entre la grille d'auvent 70 et la pièce d'insonorisation 40.

La pièce d'insonorisation 40 monobloc comprend un corps principal 42, formant sensiblement un plan, et à son extrémité, un décrochement 41. Ce décrochement 41 est destiné à permettre la fixation du dispositif 10 de façon à ce que le corps principal 42 de la pièce d'insonorisation 40 et le dispositif 10, objet de l'invention, soient disposés dans le même plan. Le dispositif 10 est ainsi disposé entre la grille d'auvent 70 et le décrochement 41.

Le dispositif 10 est fixé sur la pièce d'insonorisation 40, sur la doublure d'aile 80 du véhicule et sur l'une des extrémités 61 d'un élément porteur 60. Cet élément porteur 60 comporte à son autre extrémité des éléments de suspension du véhicule.

Le dispositif 10, se compose de trois parties :
- une première partie 11 destinée à évacuer l'eau,
- une deuxième 12 partie destinée à recueillir et à guider l'eau,
- une troisième partie 20 destinée à guider l'eau entre la grille d'auvent 70 et la deuxième partie 12.

La première partie est formée d'un élément tubulaire 11 disposé sensiblement horizontalement, l'une de ses extrémités 14 débouche dans un orifice 81 réalisé à travers la doublure d'aile 80.

La deuxième partie est formée d'un corps 12 creux, oblong, ouvert dans sa partie supérieure. L'une des extrémités de ce corps comprend un orifice 13 auquel est raccordé l'élément tubulaire 11. L'autre extrémité 19 de cette deuxième partie est en appui contre la doublure de traverse inférieure de baie 3.

La troisième partie 20 est formée d'un élément tubulaire disposé sensiblement verticalement entre la grille d'auvent 70 et le corps 12 de la deuxième partie. A cet effet, la grille d'auvent 70 comporte un orifice 71 auquel est raccordé l'une des extrémités de l'élément tubulaire 20, l'autre extrémité de l'élément tubulaire 20 est raccordé au niveau d'une encoche 15 réalisée sur le corps 12 de la deuxième partie.

Les différentes parties 11, 12, 20 du dispositif peuvent notamment être des pièces moulées réalisées en matière plastique.

Le dispositif 10, comprend deux pattes d'accrochage 16, 17 disposées à l'extrémité de la deuxième partie 12 opposée au pare-brise 5. Les pattes 16, 17 sont disposées de façon sensiblement parallèle à la grille d'auvent 70. La première patte 16 permet la fixation du dispositif 10 sur le corps principal 42 de la pièce d'insonorisation 40. La seconde patte d'accrochage 17 permet la fixation du dispositif 10 sur le décrochement 41 de la pièce d'insonorisation 40 et sur l'élément porteur 60.

Les fixations citées ci-dessus, ainsi que celle liant le dispositif 10 à la doublure d'aile 80 peuvent, par exemple, être réalisées par vissage ou par tout autre moyen de fixation approprié : clippage...

Une mousse 9 d'isolation acoustique peut également être disposée entre l'une face du dispositif 10 en contact avec la doublure d'aile 80 ou avec la doublure de traverse inférieure de baie 3.

Un joint en caoutchouc 18 peut également être déposé sur la face de la deuxième partie 12 en contact avec la doublure d'aile 80, ainsi l'eau se trouve confiner dans la deuxième partie 12 du dispositif 10 jusqu'à son évacuation.

Ainsi le dispositif de l'invention permet de canaliser l'eau et de contrôler son évacuation afin d'éviter son infiltration dans des zones sensibles du compartiment moteur, notamment au niveau des équipements électriques et de l'élément porteur 60 ; l'eau en provenance de la grille d'auvent 70 et du pare-brise 5 est ainsi évacuée au-delà de la doublure d'aile 80 dans une zone insensible à l'eau.

Bien évidemment, le dispositif 10 peut être placé du côté droit et/ou du côté gauche du véhicule.

## Revendications

1. Véhicule comprenant un dispositif de guidage et d'évacuation d'eau s'étendant dans un compartiment moteur du véhicule entre l'extrémité latérale d'une grille d'auvent (70) et un élément de carrosserie (80) du véhicule, **caractérisé en ce que** le dispositif de guidage et d'évacuation d'eau comprend:
- un premier élément tubulaire (11) pour évacuer l'eau au travers de l'élément de carrosserie (80),
- un corps creux (12), oblong, ouvert dans sa partie supérieure, destiné à recueillir et à guider l'eau en provenance de la grille d'auvent (70), ledit corps (12) comprenant un orifice (13) auquel est raccordé le premier élément tubulaire (11) pour évacuer l'eau au travers de l'élément de carrosserie (80),
- un deuxième élément tubulaire (20) guidant l'eau entre la grille d'auvent (70) et les corps creux (12), oblong, ouvert dans sa partie supérieure, destiné à recueillir et à guider l'eau en provenance de la grille d'auvent (70).

2. Véhicule selon la revendication 1, **caractérisé en ce que** le premier élément tubulaire (11) est disposé sensiblement horizontalement.

3. Véhicule selon la revendication 1, **caractérisé en ce que** le deuxième élément tubulaire (20) est disposé sensiblement, verticalement, entre la grille d'auvent (70) et les corps creux (12), oblong, ouvert à sa partie supérieure.

4. Véhicule selon l'une des revendications 1 à 3, **caractérisé en ce qu'**il comprend une traverse inférieure de baie (2) fixée rigidement à des éléments de structure et supportant le bord inférieur d'un pare-brise (5) et une grille d'auvent (70), et **en ce qu'**il comprend un élément de carrosserie (80) supporté par lesdits éléments de structure, le dispositif de guidage et d'évacuation d'eau étant placé au voisinage de l'élément de carrosserie (80).

5. Véhicule selon la revendication 4, **caractérisé en ce qu'**une mousse d'isolation acoustique (9) est disposée entre ledit dispositif (10) et l'élément de carrosserie (80) du véhicule.

6. Véhicule selon l'une quelconque des revendications 4 et 5, **caractérisé en ce qu'**il comprend des moyens d'insonorisation (40) placés sensiblement parallèlement à ladite traverse inférieure de baie (2), et **en ce que** ledit dispositif (10) est disposé entre la grille d'auvent (70) et lesdits moyens d'insonorisation (40).

7. Véhicule selon l'une quelconque des revendications 4 à 6, **caractérisé en ce que** ledit dispositif (10) est fixé sur l'une des extrémités d'une pièce (60) de liaison, des éléments de suspension du véhicule étant situés au voisinage de l'autre extrémité de ladite pièce (60) de liaison.

## Patentansprüche

1. Fahrzeug mit einer Vorrichtung zum Ableiten und Ausbringen von Wasser, die sich in einem Motorraum des Fahrzeugs zwischen dem seitlichen Ende einer Windlaufverkleidung (70) und einem Karosserieelement (80) des Fahrzeugs erstreckt, **dadurch gekennzeichnet, dass** die Vorrichtung zum Ableiten und Ausbringen von Wasser folgendes umfasst:
1) ein erstes rohrförmiges Element (11) zum Ausbringen des Wassers durch das Karosserieelement (80),
2) einen länglichen Hohlkörper (12), der in seinem oberen Abschnitt offen und dazu bestimmt ist, das aus der Windlaufverkleidung (70) kommende Wasser zu sammeln und abzuleiten, wobei der besagte Körper (12) eine Öffnung (13) aufweist, an die das erste rohrförmige Element (11) angeschlossen ist, um das Wasser durch das Karosserieelement (80) abzuleiten,
3) ein zweites rohrförmiges Element (20) zum Ableiten des Wassers zwischen der Windlaufverkleidung (70) und dem Hohlkörper (12), der länglich, in seinem oberen Abschnitt offen, und dazu bestimmt ist, das aus der Windlaufverkleidung (70) kommende Wasser zu sammeln und abzuleiten.

2. Fahrzeug nach Anspruch 1, **dadurch gekennzeichnet, dass** das erste rohrförmige Element (11) in etwa waagrecht angeordnet ist.

3. Fahrzeug nach Anspruch 1, **dadurch gekennzeichnet, dass** das zweite rohrförmige Element (20) in etwa senkrecht zwischen der Windlaufverkleidung (70) und dem Hohlkörper (12) angeordnet ist, der länglich und in seinem oberen Abschnitt offen ist.

4. Fahrzeug nach einem der Ansprüche 1 bis 3, **dadurch gekennzeichnet, dass** es einen unteren Dachrahmen-Querträger (2) umfasst, der fest mit den Strukturelementen verbunden ist, und den unteren Rand einer Windschutzscheibe (5) und eine Windlaufverkleidung (70) trägt, und dadurch, dass es ein Karosserieelement (80) umfasst, das von den besagten Strukturelementen getragen wird, und die Vorrichtung zum Ableiten und Ausbringen von Wasser in der Umgebung des Karosserieelements (80) angebracht ist.

5. Fahrzeug nach Anspruch 4, **dadurch gekennzeichnet, dass** ein Schalldämmungsschaumstoff (9) zwischen der besagten Vorrichtung (10) und dem Karosserieelement (80) des Fahrzeugs angeordnet ist.

6. Fahrzeug nach irgendeinem der Ansprüche 4 und 5, **dadurch gekennzeichnet, dass** es Schalldämmungsvorrichtungen (40) umfasst, die in etwa parallel zum besagten Dachrahmen-Querträger (2) angeordnet sind, und dadurch, dass die besagte Vorrichtung (10) zwischen der Windlaufverkleidung (70) und den besagten Schalldämmungsvorrichtungen (40) angeordnet ist.

7. Fahrzeug nach irgendeinem der Ansprüche 4 bis 6, **dadurch gekennzeichnet, dass** die besagte Vorrichtung (10) an einem der Enden eines Verbindungsteils (60) befestigt ist, und sich die Federungselemente des Fahrzeugs in der Umgebung des anderen Endes des besagten Verbindungsteils (60) befinden.

## Claims

1. Vehicle comprising a device for guiding and evacuating water extending in an engine compartment of the vehicle between the lateral end of a cowl vent grille (70) and a bodywork element (80) of the vehicle, **characterised in that** the device for guiding and evacuating water comprises:
1) a first tubular element (11) in order to evacuate the water through the bodywork element (80),
2) a hollow body (12), oblong, open in its upper portion, intended to collect and guide the water coming from the cowl vent grille (70), said body (12) comprising an orifice (13) to which is connected the first tubular element (11) in order to evacuate the water through the bodywork element (80),
3) a second tubular element (20) guiding the water between the cowl vent grille (70) and the hollow body (12), oblong, open in its upper portion, intended to collect and guide the water coming from the cowl vent grille (70).

2. Vehicle according to claim 1, **characterised in that** the first tubular element (11) is arranged substantially horizontally.

3. Vehicle according to claim 1, **characterised in that** the second tubular element (20) is arranged substantially vertically, between the cowl vent grille (70) and the hollow body (12), oblong, open at its upper portion.

4. Vehicle according to one of claims 1 to 3, **characterised in that** it comprises a lower spring plank (2) fixed rigidly to structural elements and supporting the lower edge of a windscreen (5) and a cowl vent grille (70), and **in that** it comprises a bodywork element (80) supported by said structural elements, with the device for guiding and evacuating water being placed in the vicinity of the bodywork element (80).

5. Vehicle according to claim 4, **characterised in that** an acoustic insulation foam (9) is arranged between said device (10) and the bodywork element (80) of the vehicle.

6. Vehicle according to any of claims 4 and 5 **characterised in that** it comprises means of soundproofing (40) placed substantially parallel to said lower spring plank (2), and **in that** said device (10) is arranged between the cowl vent grille (70) and said means of soundproofing (40).

7. Vehicle according to any of claims 4 to 6, **characterised in that** said device (10) is fixed on one of the ends of a connection part (60), with suspension elements of the vehicle being located in the vicinity of the other end of said connection part (60).
